# EUROPEAN PATENT APPLICATION

(11) **EP 1 647 925 A1**
(43) Date of publication of application: **19.04.2006**
(21) Application number: 04425780.6
(22) Date of filing: 15.10.2004
(51) Int. Cl.: G06N 3/06

(54) **"Artificial or bionic neural structure formed by modular electronic elements for generating and/or re-establishing correct communication between components of a biological structure, in particular a nervous system"**

(71) Applicant: Errigo, Demetrio Pietro, 45100 Rovigo (IT)
(72) Inventor: Errigo, Demetrio Pietro, 45100 Rovigo (IT)
(74) Representative: Ferrari, Barbara

(57) **Abstract**

An artificial or bionic neural structure (20) formed by modular electronic elements for generating and/or re-establishing correct communication between components of a biological structure, in particular a nervous system, is described, of the type comprising a central section (21) responsible for the generation of electrical signals, as well as a first and a second end section (22A, 22B respectively) connected to the central section (21) and to respective input and output terminals (IN, OUT respectively) located on opposite sides with respect to a point of interruption of the communication. Advantageously, the structure according to the invention comprises a plurality of modular electronic devices (30) interconnected together to form at least one pair of meshes and capable of generating analogue electrical signals of various waveforms and various electric powers.

## Description

### Field of application

The present invention refers to an artificial or bionic neural structure formed by modular electronic elements for generating and/or re-establishing correct communication between components of a biological structure, in particular a nervous system.

More specifically, the invention refers to a structure of the aforementioned type and comprising a central section responsible for the generation of electrical signals, as well as a first and a second end section connected to the central section and to respective input and output terminals located on opposite sides with respect to a point of interruption of the communication.

In particular, but not exclusively, the invention concerns a system for producing electrical signals to be used in the field of bionics in human and animal nervous systems that have suffered damage to the mechanisms for transmitting information after illness and/or traumatic events; the following description is made with reference to this field of application with the sole purpose of simplifying its presentation.

### Prior art

As is well known, the transmission of stimuli inside the human or animal nervous system is carried out by neurotransmitters that are molecules capable of transmitting information signals at the cellular synapses according to an electro-chemical mechanism.

In particular, it has already been demonstrated that the operation of the animal nervous system is based upon the well known Na-K physiologic pump that works with energy values swinging between opposite equilibrium values.

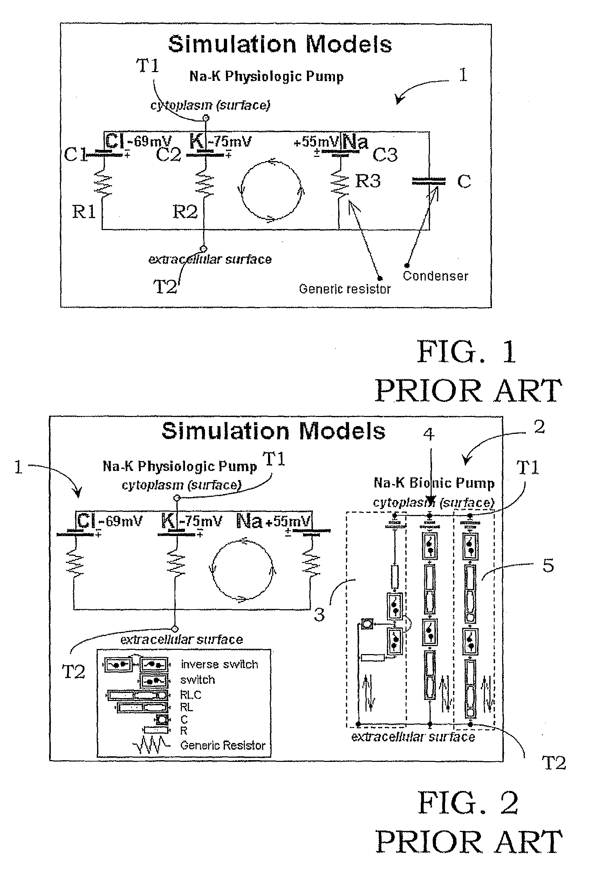

Such an Na-K physiologic pump can be emulated electronically through a model schematically illustrated in figure 1 and wholly indicated with 1.

Such a model 1, which we shall define as physiologic, essentially comprises three modelling branches formed from series (or parallel) RC (or RLC) circuits, connected together in parallel between a first T1 and a second terminal T2, respectively corresponding to the surface of a cytoplasm and to an extracellular surface.

More specifically, these serial (or parallel) RC (or RLC) circuits, R1-C1, R2-C2 and R3-C3 are used to model the equilibriums of the elements Cl, K and Na, respectively.

The voltage originating from the direct current (DC) generators C1, C2 and C3 is fixed at -69mV, -75mV and +55mV, respectively.

In the physiologic model 1 a common capacitor C is also foreseen, connected in parallel to the RC (or RLC) circuits between the terminals T1 and T2.

Starting from such a physiologic simulation model of the Na-K pump it is possible, introducing suitable modifications, to simulate three-dimensional coupling branches of various artificial circuits, so as to obtain, in the bionic field of application, artificial "tissues" for "apparatuses" or "systems" potentially for replacing analogous biological apparatuses and systems.

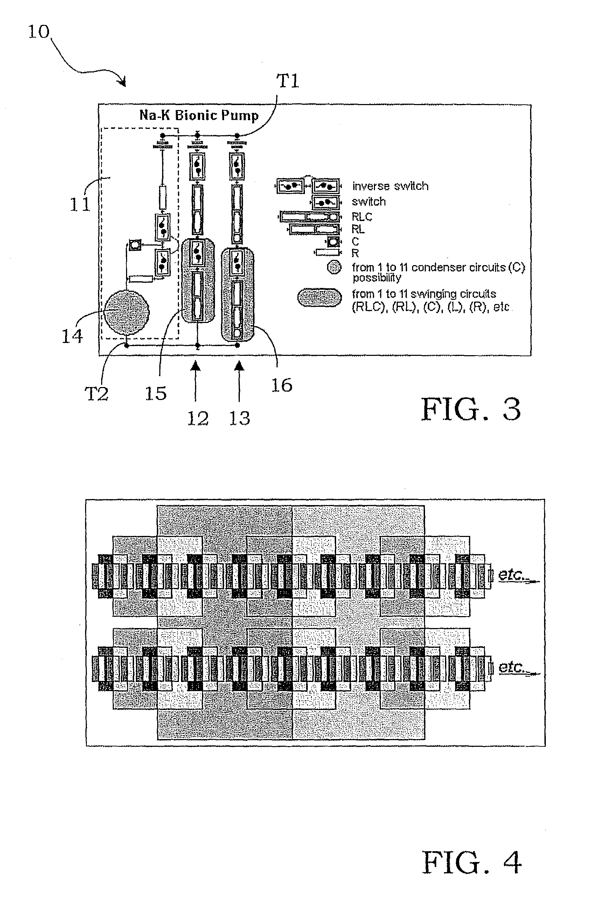

A corresponding simplified model of the Na-K pump, which we shall define as bionic, is illustrated as an example in figure 3 and wholly indicated with 2.

Such a bionic model 2 comprises, in an analogous way to the physiologic model 1, a first T1 and a second terminal T2, respectively corresponding to the surface of a cytoplasm and to the extracellular surface between which a first 3, a second 4 and a third modelling branch 5 are connected.

The first modelling branch 3 comprises, in series between the terminals T1 and T2 respectively, a DC generator, a first resistor, an inverter switch and a second resistor, an intermediate point of the inverter switch being connected to the second terminal T2 through a further capacitor.

Moreover the second branch 4 comprises, in series between the terminals T1 and T2 respectively, a DC generator, a first switch, a first RL circuit, a second switch and a second RL circuit.

Finally, the third branch 5 comprises, again in series between the terminals T1 and T2 respectively, a DC generator, a first switch, a first RLC circuit, a second switch and a second RLC circuit.

The results that can be obtained with such a bionic model 2 can of course be applied, although with all of the necessary modifications and implementations, to more complex circuits or more generally to the same circuit that "works" with the addition in parallel of successive meshes or networks, suitably modified, to obtain, indeed, the desired couplings.

Such modellings have been studied for years to seek the way to re-establish the interruption in communication inside the nervous system, for example due to a traumatic event.

Studies carried out in many laboratories have been able to show that, within the nervous system, each group of cells responsible for a precise task communicates on a determined series of frequencies in order to ensure a transmission of data relative to a specific piece of information.

A possible interruption in this communication, be it partial or total, may also be due to structural defects of a given cell or of a group of cells and can produce a lack of communication of the information in question. The group of cells involved by such a lack or interruption in communication does not therefore accomplish its natural task.

Many studies have been made to try to re-establish specific neural communications in the case of defective operation of the cells responsible for such communications, or in the case of traumatic events, without however achieving a device capable of re-establishing such a communication, i.e. operating as a real bionic neural device.

The technical problem forming the basis of the present invention is that of devising a device or a modular electronic element having structural and functional characteristics such as to allow an artificial neural structure to be made that is capable of simulating a group of natural neurones *in situ.*

### Summary of the invention

The solution idea forming the basis of the present invention is that of making an artificial neural structure through a plurality of swinging circuits grouped in meshes. In particular, the invention proposes collecting together and processing analogue and digital signals produced inside such meshes so as to provide compressed information bands.

Based upon such a solution idea the technical problem is solved by an artificial neural structure of the type indicated previously and defined by the characterising part of claim 1.

The characteristics and advantages of the artificial neural structure according to the invention shall become clear from the description, made hereafter, of an example embodiment thereof, given for indicating and not limiting purposes, with reference to the attached drawings.

### Brief description of the drawings

In such drawings:
Figures 1 and 2 schematically show a modelling of an Na-K physiologic pump according to the prior art;
Figure 3 schematically shows a modelling of an Na-K bionic pump that represents the theoretical basis of the present invention;
Figure 4 schematically shows a variant of a detail of the model of figure 3;
Figures 5 and 6 schematically show a bionic neural structure according to the invention in different way of operating;
Figure 7 schematically shows a modular electronic device capable, according to the invention, of simulating an analogue bionic module;
Figure 8 compares two different configurations of the bionic module of figure 7;
Figure 9 shows a bionic module made according to the invention in greater detail;
Figure 10 schematically shows possible configurations of the bionic module made according to the invention;
Figures 11 and 12 schematically show organisations of modules for making a neural bionic structure according to the invention.

### Detailed description

With reference to such figures, and in particular to the example of figure 3, a bionic model of an Na-K pump that forms the theoretical basis of the present invention is wholly and schematically indicated with 10.

Hereafter we shall talk about a bionic model (or structure) with this term intending to refer to objects made in analogy with the biological behaviour of the human or animal nervous system.

According to such a bionic model 10 the neurotransmitters move along predetermined directions and at a constant frequency or isofrequency.

In particular, the bionic model 10 comprises, in accordance with the well known physiologic model 1 illustrated previously, a first terminal T1 and a second terminal T2, respectively corresponding to the surface of a cytoplasm and to the extracellular surface between which a first 11, a second 12 and a third modelling branch 13 are connected.

In particular, the first modelling branch 11 comprises, in series between the terminals T1 and T2 respectively, a DC generator, a first resistor, an inverter switch and a second resistor, an intermediate point of the inverter switch being connected to the second terminal T2 also through a capacitor.

Advantageously, according to the invention, the first modelling branch 11 also comprises, connected between the second resistor and the second terminal T2, a capacitor circuit 14 with a complex structure and comprising a variable number of elementary capacitor structures.

Moreover, the second branch 12 comprises, in series between the terminals T1 and T2 respectively, a DC generator, a switch and an RL circuit.

Advantageously, according to the invention, the second modelling branch 12 also comprises, connected between the RL circuit and the second terminal T2, a first complex swinging circuit 15 in turn comprising a variable number of elementary swinging circuits formed from switches and RL circuits.

Finally, the third branch 13 comprises, again in series between the terminals T1 and T2 respectively, a DC generator, a switch and an RLC circuit.

Advantageously, according to the invention, the third modelling branch 13 also comprises, connected between the RLC circuit and the second terminal T2, a second complex swinging circuit 16 in turn comprising a variable number of elementary swinging circuits formed from switches and RLC circuits.

The elementary swinging circuits can be series circuits, as illustrated as an example in figure 3, but, in a totally equivalent way, they can be parallel circuits or mixed series-parallel circuits.

Moreover, it should be noted that the complex swinging circuits 15 and 16 substantially comprise elementary components such as resistors, inductors and capacitors, organised in meshes or networks, such meshes being able to be increased in number as illustrated in figure 4.

For the sake of simplicity of presentation, hereafter reference shall be made to a base double mesh, as illustrated in figure 3, the considerations and the results obtained nevertheless being able to be easily translated to all possible more complex derived schemes.

Starting from known equilibrium values of the Na-K pump, the bionic model 10 according to the invention allows an artificial or bionic neural structure to be obtained. In particular, the proposed bionic neural structure is made to work in a substantially forced way, artificially causing its imbalance.

For this purpose, in the bionic neural structure of the present invention additional switches are inserted and the generic resistances are replaced with special resistors, working in variable frequency fields in predetermined ranges, as shall become clear in the rest of the description.

In such a way, by interrupting the operation of such elements with particular frequencies, conditions of imbalance can be created, consequently obtaining the generation of different current values that in turn cause various emissions of signals in transmission with various frequencies and various waveforms.

Advantageously, according to the invention, the proposed bionic neural structure comprises a plurality of modular cards, connected together, suitable for producing analogue electrical information signals with various waveforms and various electrical powers.

In particular, to be able to simulate a neural communication, such a bionic neural structure acts with frequencies operating in the field of radio waves and in the field of light waves. Moreover, the electrical powers used for the generation and subsequent treatment of signals are bio-compatible or computer-compatible, according to the following ways:
1. for frequencies operating in the field of radio waves, the powers are bio-compatible;
2. for frequencies operating in the field of light waves, the powers are computer-compatible.

A bionic neural structure 20 comprises a central section 21 responsible for the generation of signals for transmission, as well as a first 22A and a second end section 22B connected to the central section 21 and to a respective input terminal IN and output terminal OUT of the bionic neural structure 20.

In particular, the first end section 22A is suitable for collecting control signals received on the input terminal IN and for sending them to the central station, whereas the second end section 22B is suitable for routing and amplifying the signals for the transmission coming from the central section 21 towards the output terminal OUT.

The bionic neural structure 20 according to the invention allows the connection between a first 23A and a second group of biological neurones 23B, in particular at a first and a second intersynaptic space 24A and 24B, respectively.

Advantageously, according to the invention, the bionic neural structure 20 is also equipped with an input interface 25A, connected between the first intersynaptic space 24A and the input terminal IN, and with an output interface 25B, connected between the output terminal OUT and the second intersynaptic space 24B.

In particular, the input interface 25A comprises a set of contact probes suitable for receiving suitable neuro-electric signals from the first intersynaptic space 24A and connected to control and feedback elements.

In the same way, the output interface 25B comprises a set of contact probes suitable for transmitting suitable neuro-electric signals to the second intersynaptic space 24B and connected to control and feedback elements.

In such a case, the connection probes, in reception and in transmission, contained in the input and output interfaces 25A and 25B, respectively, are similar and/or analogous to those now conventionally used for brain stereotaxic neuro-surgery.

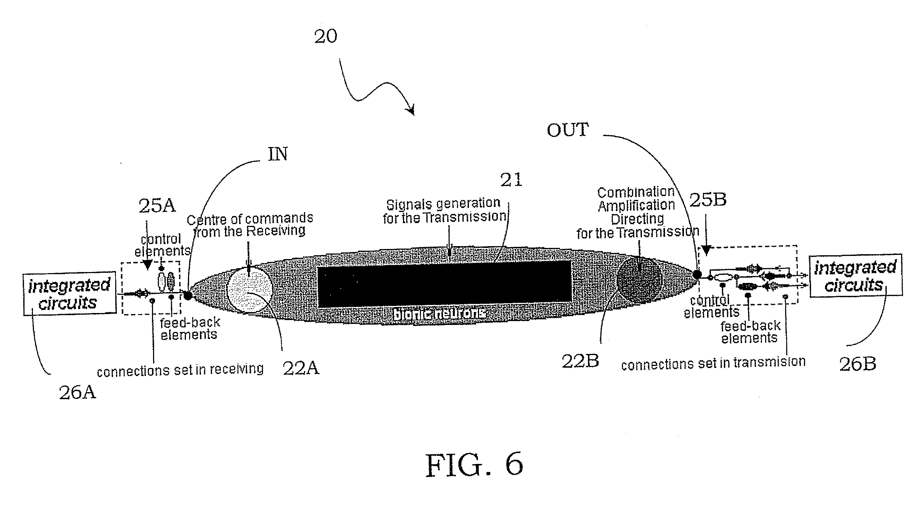

In a totally equivalent way, it is possible to use the bionic neural structure 20 according to the invention for connection to a first and second group of integrated circuits 26A and 26B, respectively, replacing the contact probes inside the input and output interfaces with suitable connection terminals, as schematically illustrated in figure 6.

In such a case, the connection terminals, in reception and in transmission, contained in the input and output interfaces 25A and 25B, respectively, are similar and/or analogous to the usual ones between wired circuits and/or integrated circuits.

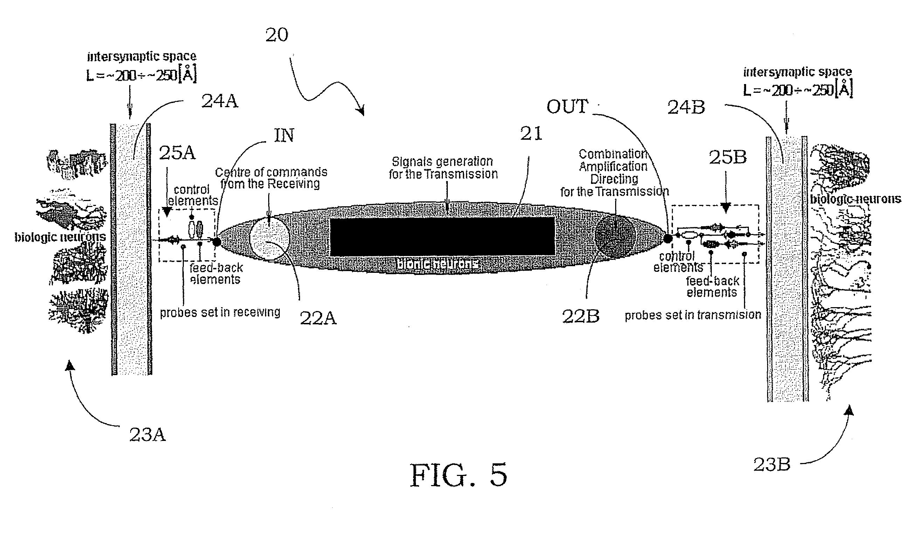

The proposed bionic neural structure 20 is, indeed, able to work in at least two ways of operating and therefore in at least two separate fields of application:
1. according to a first way illustrated in figure 5, to carry out a connection from the outside of an organism towards its inside or else inside the organism itself;
2. according to a second way illustrated in figure 6, to carry out a connection from the outside of a data processing machine towards its inside or else inside the data processing machine itself.

It is also possible to consider a third way of operating with mixed operation in which an organism and a data processing machine work in special conditions of interconnection.

Therefore, the bionic neural structure 20 according to the invention operates receiving and transmitting analogue signals, which, by their nature, provide all possible information and are the only things that are bio-compatible, avoiding transductions and/or conversions.

To do this, the bionic neural structure 20 comprises a plurality of elementary components, or bionic modules, based upon the bionic model 10 of the Na-K pump illustrated in figure 3.

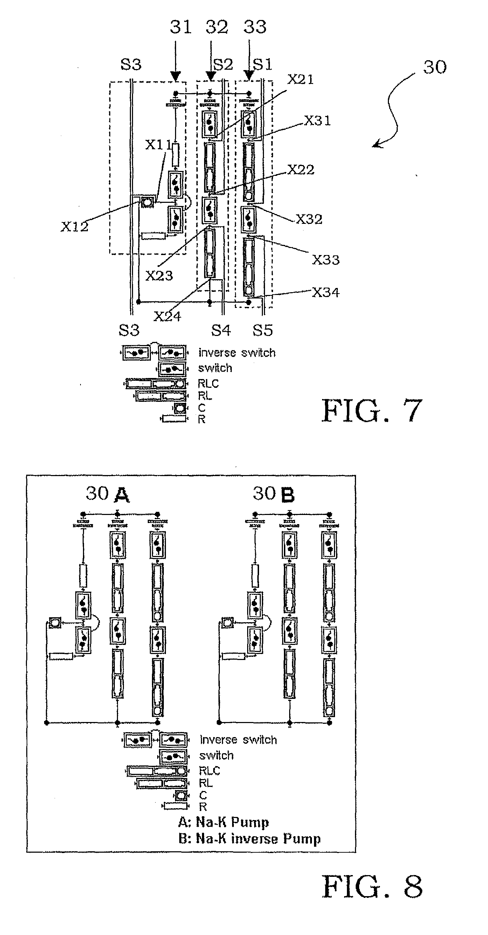

In particular, each module 30, as schematically indicated in figure 7, comprises a first, a second and a third circuit branch 31, 32 and 33, respectively, corresponding to the modelling branches illustrated with reference to the bionic module 10, the number h of which can vary (with h>3).

Studying such a module 30 it has been found that it is able to generate five types of signals S 1-S5 at internal circuit nodes.

In particular, the first circuit branch 31 has a first and a second internal circuit node X11 and X21, respectively, at the ends of a capacitor included in it. In the same way, the second circuit branch 32 has a first and a second internal circuit node X21 and X22, respectively, at the ends of a first RL circuit included in it, a third and a fourth internal circuit node X23 and X24, respectively, at the ends of a second RL circuit included in it. Finally, the third circuit branch 33 has a first and a second internal circuit node X31 and X32, respectively, at the ends of a first RLC circuit included in it, a third and a fourth internal circuit node X33 and X34, respectively, at the ends of a second RLC circuit included in it.

Simulating the operation of the module 30, it was thus noted that the simple signals (S1, S2, S3, S4, S5) were similar or analogous to the intra-cellular ones, whereas the composite ones (S1-S3, S2-S3, S4-S3, S5-S3) were similar or analogous to the extra-cellular ones.

In particular, the similarity or analogy relative to the following properties was noted:
1. Current intensity
2. Difference in potential
3. Frequency
4. Waveform

Moreover, corresponding counter-signals were obtained by simply inverting the power supplies of the circuit branches 31-33, as schematically illustrated in figure 8 where a module 30A suitable for making an Na-K pump and a module 30B suitable for making an Na-K inverse pump are compared.

Advantageously, according to the invention, using different frequencies for the switch included in the module 30, different amperage values were obtained, in other words correct operation also on the highest harmonics.

In such a way, it is also possible to activate various information flows inside the module 30 in a manner also synchronous with possible peripheral receivers and not just on a single effective receiver.

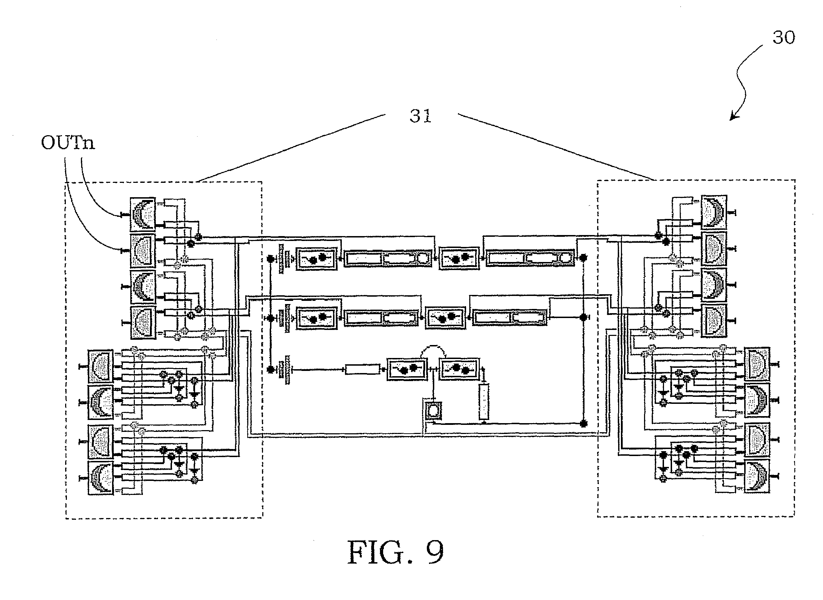

To do this, the module 30 is suitably connected to a logic processing structure 31 comprising a plurality of logic gates suitable for receiving signals S1-S5 inside the module 30 in an alternating manner, so as to provide information bands on a plurality of output terminals OUTn, as schematically illustrated in figure 9.

The plurality of logic gates inside the logic processing structure 31, similar or analogous to digital NOT, AND, OR gates, is organised in groups, according to known configurations in series and/or in parallel.

In particular, each initial signal S1-S5 produced inside the module 30 (analogue electric information signal) is treated by the groups of logic gates to obtain elementary information bands (again analogue electric information signals) responding to the conditions dictated by a conventional logic (of the binary 0.1 type) and/or by "Fuzzy" logic, to then be recomposed in the output information bands.

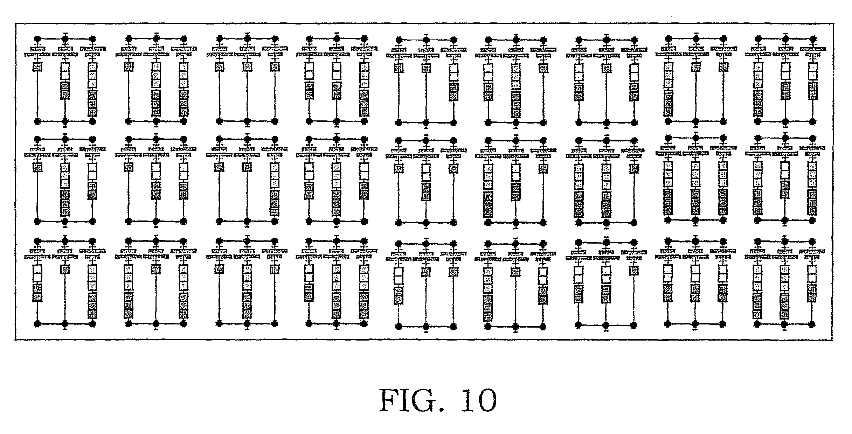

Each module 30 can comprise twenty-seven configurations that can also coexist, as schematically illustrated in figure 10, given by the combinations of the base distribution; in particular, these theoretically correspond to twenty-seven biochemical mechanisms that are similar or analogous, causing, in simulation, the analogue of twenty-seven resonance hybrids.

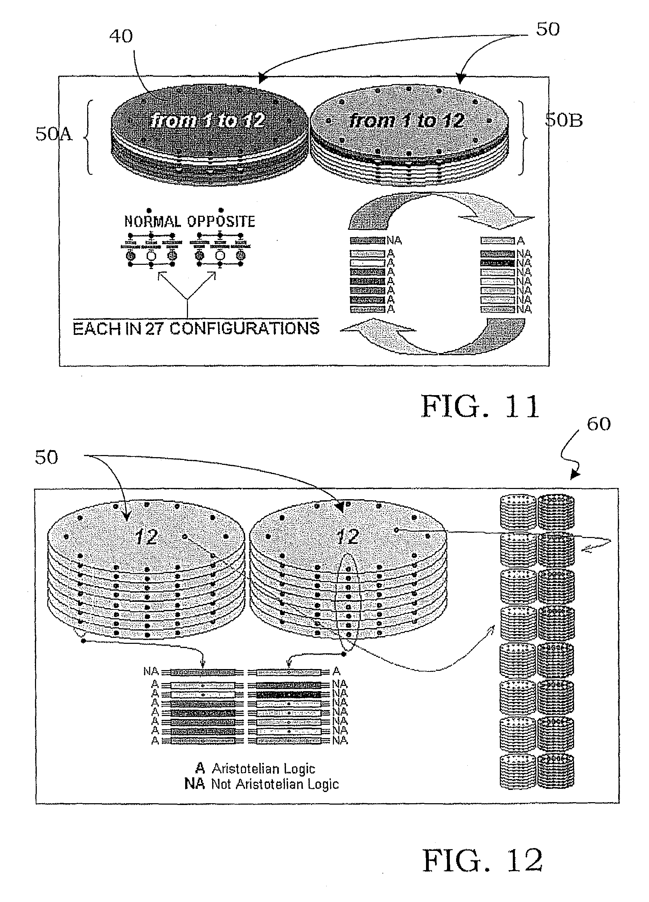

Advantageously, according to the invention, the modules 30 thus conceived in their different configurations, are organised into groups 40, each comprising up to n modules, as schematically illustrated in figure 11 with n= 12.

Moreover, each group or assembly of m groups makes a modular card 50 according to the invention, as schematically illustrated in figure 11 with m=12.

According to the invention, the modular cards 50 are organised into:
1. sub-sub-assemblies for example of eight cards (one of which in conventional logic and seven in fuzzy logic) to constitute a first subassembly 50A of 64 cards;
2. sub-sub-assemblies for example of eight cards (one of which in fuzzy logic and seven in conventional logic) to constitute a second subassembly 50B of 64 cards.

In this case, the two sub-assemblies constitute an overall assembly capable of generating the signals required for the bionic neural structure 20, in the illustrated example using 128 cards that make a base assembly 60 as schematically illustrated in figure 12.

Each new band of information signals is divided into various bands of sub-signals with suitable retro-actuated phasing, which, in turn, are distributed, for example, between the modular cards, with the mathematical criteria of the Setting, Combination and Permutation operations, obtaining composite bands.

Each composite band can, in turn, be amplified (through groups of circuits with two or more meshes, similar to the previous ones and replaced in their functions by modules or blocks, for example of the AGC and/or PGA type) and, subsequently prepared for transmission with final controls carried out through further groups of circuits with two or more meshes, also similar to the previous ones and replaced in their functions by modules or blocks, for example of the AGC and/or PGA type, thus obtaining the definitive signals.

Each definitive signal, ready for analogue transmission, can also be subjected to Analogue/Digital converters to obtain possible immediate computerised controls.

The signals transmitted (just like those received) are also retro-actuated up to the switches of the individual branches of the individual meshes of the individual electrical schemes, to carry out both new ways of producing the initial signals (waveform, wavelength, electrical power), and the formation of growing memories (for example of the E² type) that are also subjected to possible computerised controls.

The switches contained in the modules 30 are also able (through suitable frequency adapters, waveform adapters, etc.) to receive signals from other transmission sources, signals that in turn regulate the production of the signals to be transmitted both in waveform, in wavelength and in electrical power.

With reference to the ways of operating of the bionic neural structure 20, illustrated previously, at this point it is useful to specify the operation of the first and of the second end section 22A, 22B of the bionic neural structure 20 according to the invention.

In particular, according to the first way, the analogue signals going in are directed to frequency and waveform converters of the swings of the elementary circuits included in the bionic neural structure 20, provided comparing with the memories of the generation circuits themselves.

In the same way, the analogue signals in output are sent to double probes one of which is in feedback for comparing with the memories of the generation circuits.

Moreover, according to the second way, the digital signals going in are firstly subjected to Digital/Analogue converters and then directed to the frequency and waveform converters of the swings of the circuits, provided comparing with the memories of the generation circuits.

In the same way, the analogue signals in output are firstly subjected to Digital/Analogue converters and then sent to double connections one of which is in feedback for comparing, after the obvious Digital/Analogue conversion, with the memories of the generation circuits.

In conclusion, the bionic neural structure 20 allows an instrument operating exclusively with (direct or indirect) analogue inputs and outputs, whilst still being totally compatible with possible digital commands, to be made.

It should be highlighted that the proposed bionic neural structure 20 has numerous applications according to the ways of operating indicated and illustrated above.

In particular, according to a first way of operating, the bionic neural structure 20 makes it possible to make:
bionic components of animal and vegetable organisms;
simulations and/or counter-simulations (for therapeutic purposes) of any type of cellular signal through generation of the same energy contents of the cells considered;
by-pass components for applications in cases of tetraplegia, paresis, or similar, deriving from external causes, i.e. from ictus, from aneurisms and/or similar;
components for partial or total replacement of cerebral nerve pairs or of nerve channels of the dorsal vertebrae;
intervention means on sensory and/or motor situations for any type of neuropathy, for example in cases of Alzheimer's or Parkinson's disease, in the case of sclerosis, epilepsy, senile dementia, impotence, frigidity, as well as in the case of degeneration of the tissues for causes, which may also be external, acting on the nervous system;
generic or specific intervention means on the central or peripheral nervous system, voluntary or involuntary, total or partial;
intervention means on brain sectors, for any type of dysfunction, like in the case of dysphemia, neurosis, psychosis, anorexia, bulimia, anxiety, stress, depression, obesity, total or partial loss of memory, of sleep, etc.;
intervention means on bacterial or viral pathologies;
intervention means on various symptomatologies like, for example, neuralgia, myalgia, arthrosis, etc.;
intervention means on neoplastic cells, on the lymphatic system, on the enzymatic system, on the immune system and on the hormonal system;
intervention means on biological apparatuses and tissues;
simulations of macromolecular behaviour in biological systems and/or apparatuses;
direct and, above all, inverse, protein simulations for applications in the study of AIDS, AIF, Prions, etc;
simulations of biological mechanisms like, for example, those of ATP, MAO, etc.;
functional replacement devices of neuro-transmitters or protides in general through simulation of their relative energy contents; and
functional replacement devices of groups of artificial cells (staminal, glial, etc.) through simulation of the relative energy contents.

In the same way, according to the second way of operating, the bionic neural structure 20 makes it possible to make:
parts or the totality of a super-computer network, acting at the speed of light and, each one, with the complexity of a human brain; and
parts or the totality of a signal receiving and transmitting network, acting at the speed of light and with the complexity of a human brain.

Finally, according to the third way of operating, the bionic neural structure 20 makes it possible to make, for example, an interconnection system between the biological and the artificial, for tele-monitoring and/or sanitary tele-tests and/or other.

Advantageously, the proposed bionic neural structure 20 has a structural configuration such as to be able to be transformed, for example using the methods of nanotechnology, into structures, for example fullerenic and/or of nano-tubes and/or other.

In such a way, using the bionic neural structure 20 according to the invention and a series of multi-layer analogue circuits it is possible to make a biomedical device and a super calculator parallel with the complexity of the brain.

It should also be highlighted that the proposed bionic neural structure 20 is not only self-organising, but continually refers to itself, basically behaving like a autopoietic system, i.e. based upon the processes and upon their mutual relations and on the feedback between them.

The hardware structure of the bionic neural structure 20 does not require any software programme, by itself carrying out an operating programme in a virtual, autonomous, dynamic and automatic way.

Advantageously, according to the invention, the proposed bionic neural structure 20 transmits and processes analogue signals, in other words bio-compatible signals.

## Claims

1. Artificial or bionic neural structure (20) formed by modular electronic elements for generating and/or re-establishing correct communication between components of a biological structure, of the type comprising a central section (21) responsible for the generation of electrical signals, as well as a first and a second end section (22A, 22B) respectively connected to the central section (21) and to respective input and output terminals (IN, OUT) respectively located on opposite sides with respect to a point of interruption of the communication, **characterised in that** it comprises a plurality of modular electronic devices (30) interconnected together to form at least one pair of meshes and capable of generating analogue electrical signals of various waveforms and various electric powers.

2. Artificial neural structure according to claim 1, **characterised in that** said modular electronic devices (30) are oscillating or swinging circuits.

3. Artificial neural structure according to claim 2, **characterised in that** said oscillating circuits are complex oscillators (15, 16) essentially comprising elementary RLC components, isolated or grouped together, such as resistors, inductors and capacitors organised in meshes.

4. Artificial neural structure according to claim 3, **characterised in that** said elementary RLC components comprise components connected in series, in parallel or in a mixed series-parallel way.

5. Artificial neural structure according to claim 1, **characterised in that** said analogue electrical signals are emitted in the radio wave field.

6. Artificial neural structure according to claim 1, **characterised in that** said analogue electrical signals are emitted in the light wave field.

7. Artificial neural structure according to claim 6, **characterised in that** said electric powers are biocompatible.

8. Artificial neural structure according to claim 7, **characterised in that** said electrical powers are computer-compatible.

9. Artificial neural structure according to claim 1, **characterised in that** it is connected between a first and a second group of biological neurones (23A, 23B respectively), at a first and a second intersynaptic space (24A, 24B respectively), being equipped with an input interface (25A), connected between said first intersynaptic space (24A) and an input terminal (IN), and with an output interface (25B), connected between said second intersynaptic space (24B) and the output terminal (OUT).

10. Artificial neural structure according to claim 9, **characterised in that** said input and output interfaces (25A, 25B respectively) comprise contact probes suitable for transmitting suitable neuro-electrical signals to the first and second intersynaptic space (24A, 24B), said probes being similar and/or analogous to those used for brain stereotaxic neuro-surgery.

11. Artificial neural structure according to claim 1, **characterised in that** said modular electronic devices (30) operate based upon an Na-K bionic pump model.

12. Artificial neural structure according to claim 11, **characterised in that** said modular electronic devices (30) comprise a first, a second and a third circuit branch (31, 32 and 33 respectively), corresponding to the branches of said Na-K bionic pump model, the number of said branches being able to vary and being greater than three.

13. Artificial neural structure according to claim 11, **characterised in that** each of said modular electronic devices (30) is able to generate at least five analogue signals (S1,..., S5) at internal circuit nodes.

14. Artificial neural structure according to claim 13, **characterised in that** said analogue signals are transferred to a processing structure (31) comprising logic gates to obtain elementary information bands of the conventional or Fuzzy type.

15. Artificial neural structure according to claim 1, **characterised in that** it is totally hardware.

16. Artificial neural structure according to claim 1, **characterised in that** each mesh also comprises simple or double switches.

17. Artificial neural structure according to claim 1, **characterised in that** said resistors (R) work in variable frequency fields and in predetermined time periods.

18. Artificial neural structure according to claim 9, **characterised in that** it comprises a central section (21) responsible for the generation of analogue electrical signals, as well as a first and a second end section (22A, 22B respectively) connected to the central section (21) and to a respective input terminal (IN) and output terminal (OUT) of the bionic neural structure (20); said first end section (22A) being suitable for collecting control signals received on the input terminal (IN) and for sending them to the central station (21), whereas the second end section (22B) being suitable for routing and amplifying the signals generated by the central section (21) towards the output terminal (OUT).
